# EUROPEAN PATENT APPLICATION

(11) **EP 4 764 992 A1**
(43) Date of publication of application: **24.06.2026**
(21) Application number: 25224356.3
(22) Date of filing: 17.12.2025
(51) Int. Cl.: G06Q 10/30

(54) **FOOD WASTE QUANTIFICATION SYSTEM AND METHOD**

(30) Priority: 20.12.2024 SE 2451329
(71) Applicant: Vepred AB, 412 58 Göteborg (SE)
(72) Inventor: Chelakara Satyanarayana, Kavitha, 426 69 Göteborg (SE)
(74) Representative: Bergenstråhle & Partners AB

(57) **Abstract**

Disclosed is a system for detecting and quantifying food waste, comprising a first type of food-waste quantifying device (10) and a second type of food-waste quantifying device (20). The first type of device (10) has first sensors (11, 12, 13) for capturing data on characteristics of food waste deposited into a first food waste receptacle (15) at the first type of device (10). The first type of device (10) trains and infers an AI model using the data captured by the first sensors (11, 12, 13), to determine type of food waste and volume of food waste for a large amount of portions of food waste. The first type of device (10) sends information on its trained AI model to the second type of device (20). The second type of device (20) determines type of food waste and volume of food waste for food waste deposited into a second food waste receptacle (25) based on data captured by one or more second sensors (21, 22, 23) of the food waste, and based on the AI model information received from the first type of device (10).

## Description

### Technical field

The present invention relates generally to a food waste quantification system and a method for detecting and quantifying food waste. Embodiments of the invention relates to a distributed system for intelligent analysis and management of food waste using a network of interconnected first and second type of food waste quantifying devices.

### Background art

Effective management of food waste is a critical challenge in both domestic and commercial environments. Current systems often lack the ability to analyze and optimize the process of waste disposal, leading to inefficiencies in recycling and resource management. There is a need for a system that not only facilitates efficient food waste disposal but also provides actionable insights through intelligent data analysis.

### Summary

It is an object of embodiments of the invention to address at least some of the problems and issues outlined above. It is an object of embodiments of the invention to detect and quantify food waste in an efficient manner in more than one site. It is possible to achieve at least one of these objects by using systems and methods as defined in the attached independent claims.

According to one aspect, a system for detecting and quantifying food waste is provided. The system comprises at least one first type of food-waste quantifying device, each at least one first type of food waste quantifying device comprising one or more first sensors for capturing data on characteristics of food waste portions that are to be deposited into a first food waste receptacle at the first type of food-waste quantifying device and a control unit comprising a processor and a memory. The control unit is operative for training an AI model using data on characteristics of food waste captured by the one or more first sensors over time for a large amount of food waste portions deposited into the first food waste receptacle over time, to determine type of food waste and volume of food waste for each of the large amount of portions of food waste, and determining type of food waste and volume of food waste for a first food waste portion deposited into the first food waste receptacle after the large amount of food waste portions have been deposited, based on data on characteristics of the first food waste portion captured by the one or more first sensors and by using data from the trained AI model. The control unit further comprises a communication unit for communication with at least one second type of food-waste quantifying device. The system further comprises the at least one second type of food-waste quantifying device. Each at least one second type of food waste quantifying device comprises one or more second sensors for capturing data on a second set of characteristics of food waste portions that are to be deposited into a second food waste receptacle at the at least one second type of food-waste quantifying device a communication unit for communication with at least the at least one first type of food-waste quantifying device, and a control unit comprising a processor and a memory. The at least one first type of food-waste quantifying device is operative for sending AI model information on its trained AI model to the at least one second type of food-waste quantifying device via its communication unit. Further, the control unit of the at least one second type of food-waste quantifying device is operative for determining type of food waste and volume of food waste for a second portion of food waste that is to be deposited into the second food waste receptacle based on the data of the second set of characteristics captured by the one or more second sensors of the second portion of food waste, and based on the AI model information received from the at least one first food-waste quantifying device. Hereby, a second type of food-waste quantifying device does not need to have the same amount of computer power and/or sensors as a first type of food waste quantifying device, but still can be able to take benefit of findings performed by the sensors and AI of the first type of food-waste quantifying device for determining type of food waste in its second food waste receptacle,

According to another aspect, a method is provided performed by a system for detecting and quantifying food waste. The system comprises a first type of food-waste quantifying device comprising one or more first sensors for capturing data on characteristics of food waste portions that are to be deposited into a first food waste receptacle at the first type of food-waste quantifying device, and a second type of food-waste quantifying device comprising one or more second sensors for capturing data on a second set of characteristics of food waste portions that are to be deposited into a second food waste receptacle at the second type of food-waste quantifying device. The method comprises training, by the first type of food waste quantifying device, an AI model using data on characteristics of food waste captured by the one or more first sensors over time for a large amount of food waste portions deposited into the first food waste receptacle over time, to determine type of food waste and volume of food waste for each of the large amount of portions of food waste, determining, by the first type of food waste quantifying device, type of food waste and volume of food waste for a first food waste portion deposited into the first food waste receptacle after the large amount of food waste portions have been deposited, based on data on characteristics of the first food waste portion captured by the one or more first sensors and by using data from the trained AI model. The method further comprises triggering sending, by the first type of food waste quantifying device, AI model information on its trained AI model to the second type of food-waste quantifying device, and determining, by the second type of food waste quantifying device, type of food waste and volume of food waste for a second portion of food waste that is to be deposited into the second food waste receptacle based on the data of the second set of characteristics captured by the one or more second sensors of the second portion of food waste, and based on the AI model information received from the first type of food-waste quantifying device.

Further possible features and benefits of this solution will become apparent from the detailed description below.

### Brief description of drawings

The invention is now described, by way of example, with reference to the accompanying drawings, in which:
Fig. 1 is a schematic block diagram describing a system for detecting and quantifying food waste comprising a plurality of food-waste quantifying devices according to embodiments.
Fig. 2 is a schematic block diagram of a control unit of a first type of food waste quantifying device according to embodiments.
Fig. 3 is a schematic block diagram of a control unit of a second type of food waste quantifying device according to embodiments.
Fig. 4 is a schematic block diagram showing possible deployment topologies (peer-to-peer, hybrid, regional subnets) involving the first type and second type of food waste quantifying devices.
Fig. 5 is a schematic block diagram showing the logical components and methodology for compression, aggregation and distribution of AI model parameters from first type devices to second type device.
Fig. 6 is a schematic block diagram showing logical components and methodology for model selection on device types from multiple available models and provenance metadata from device types.
Fig. 7 is a schematic block diagram showing the logical components and methodology for secure transmission of model and provenance metadata from first type of device and secure verification and deployment on second type of device.
Fig. 8 is a schematic block diagram showing the logical components for multimodal inference and reasoning pipeline in device types. Sensor streams (e.g., image, sound, weight and depth) are encoded and fused by a cross-modal attention module to yield a joint representation of the waste portion.
Fig. 9 is a schematic block diagram showing the methodology for calibration of the device types.
Fig. 10 is a schematic block diagram showing the methodology and logical components for tamper detection and mitigation for device types.

### Description of embodiments

Embodiments of the invention comprise a network of food waste quantification devices designed to collect, analyze, and communicate data about disposed food waste. The communication may be performed in a distributed manner without relying on central servers. Each device in the network includes an enclosure for collecting food waste. At least some of the devices are each equipped with light- and/or sound-based sensors to capture and process data upon waste disposal. The following presents a description to provide a basic understanding of one or more embodiments of the invention. This description is not intended to identify key or critical elements or delineate any scope of the embodiments or any scope of the claims. Its sole purpose is to present concepts in a simplified form as a prelude to the more detailed description that is presented later. In one or more embodiments described herein, systems, devices, computer networks, computer-implemented methods, and/or computer program products that facilitate identification, quantification and prediction of food waste using machine learning and artificial intelligence are provided.

Some of the distributed learning aspects described, fundamentally shift the paradigm of machine learning from a centralized to a decentralized model, particularly within the context of managing and analyzing food waste via a network of interconnected devices. In some embodiments, the distributed network of intelligent devices eliminates the need for complete sensor setup at each device by devices lacking sensors being provided with information on artificial intelligence (AI) models trained by another device that has sensors. This transformation leverages the computational power and data collection capabilities of each device in the network, enabling a collaborative approach to model training and improvement without the need for a central data repository.

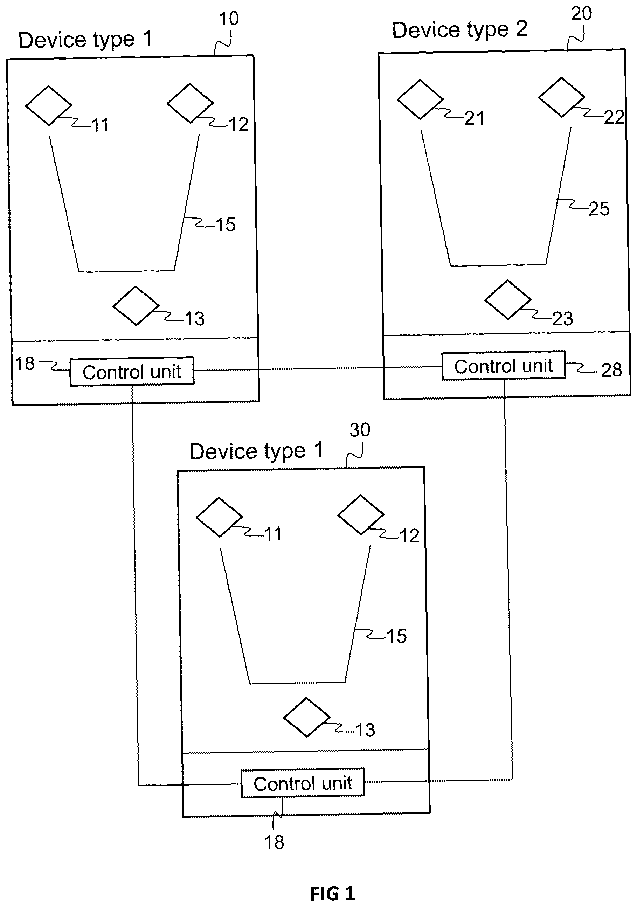

In the following, and with reference to FIG. 1, embodiments of a first type of food-waste quantifying device 10; 30 for collecting, detecting and quantifying food waste, optimized for sensor interaction is described. The first type of food-waste quantifying device 10; 30 comprises one or more first sensors 11, 12, 13 for capturing data on characteristics of food waste portions that are to be deposited into a first food waste receptacle 15 at the first type of food-waste quantifying device 10; 30. The characteristics may comprise weight, volume and type of food waste.

The one or more first sensors 11, 12, 13 may comprise at least one of a light-based sensor 11 and a sound-based sensor 12 to capture the data on characteristics of food waste portions. The light-based sensor may operate by detecting e.g. one or more of the presence, intensity, reflection, absorption, and transmission of light to monitor environmental changes, measure distance, and/or identify materials. The sound-based sensor 12 may operate by classifying the characteristics of food waste discarded in the first food waste receptacle 15 based on their acoustic signature. The acoustic signature serves as a fingerprint for characterizing specific compositions and characteristics of food waste or any other materials that are discarded in the first food waste receptacle 15. This data from sound-based sensors 13 is later used either as unique characteristic of disposed waste or for training an AI model with ground truth from the light-based sensors 11.

The one or more first sensors 11, 12, 13 may comprise a weighing scale 13. The weighing scale 13 may be positioned below the mentioned first food waste receptacle 15 so that the first food waste receptacle has its weight on the weighing scale 13. The weighing scale 13 may be operative for determining the weight of a first food waste portion deposited into the first food waste receptacle 15 by comparing the weight of the first food waste receptacle 15 before and after the first food waste portion has been dropped into the first food waste receptacle 15.

The first food waste receptacle 15 may or may not be a part of the first type of food-waste quantifying device 10; 30. In one embodiment, the one or more first sensors 11, 12, 13 are arranged to the first food waste receptacle 15 and delivered together with the first food waste receptacle 15. In another embodiment, the first food waste receptacle 15 is a general food waste receptacle that a site provides at which the first type of food-waste quantifying device 10; 30 is situated.

The first type of food-waste quantifying device 10; 30 further comprises a control unit 18. The one or more first sensors 11, 12, 13 are communicatively connected to the control unit 18. The control unit 18 is operative for collecting input from the one or more first sensors 11, 12, 13, i.e. data on characteristics of food waste captured by the one or more first sensors 11, 12, 13 when food waste is disposed into the first food waste receptacle 15. The control unit 18 is operative for determining type of food waste and volume of food waste based on the input collected from the one or more first sensors 11, 12 ,13. The control unit 18 may also be operative for determining density and/or weight of the food based on the sensor input.

The control unit 18 of the first type of food-waste quantifying devices 10; 30 is further operative for directly or indirectly communicating information/data with control units 18 of other first type of food-waste quantifying devices 10; 30 or with control units 28 of a second type of food waste quantifying device 20.

The control unit 18 of the first type of food-waste quantifying devices 10; 30 is operative for training an AI model using the data on characteristics of food waste captured by the one or more first sensors 11, 12, 13 over time for a large amount of food waste portions deposited into the first food waste receptacle 15 over time to determine type of food waste and volume of food waste for each of the large amount of portions of food waste. This can be interpreted as a training phase for the AI model. The control unit 18 of the first type of food-waste quantifying devices 10; 30 is further operative for determining type of food waste and volume of food waste for a first food waste portion deposited into the first food waste receptacle 15 after the large amount of food waste portions have been deposited, based on data on characteristics of the first food waste portion captured by the one or more first sensors 11, 12, 13 and by using data from the trained AI model. This can be interpreted as an inference phase of the AI model. As for any AI model, the AI model is continuously built out by each new food waste portion deposited and analyzed, which means the training phase and inference phase are working more or less simultaneously.

According to an embodiment, based on the inputs from the one or more first sensors 11, 12, 13, a computer implemented method performed by the control unit 18 of the first type of food waste quantifying device 10; 30 trains an AI locally to estimate one or more of depth, volume, density and weight of food waste associated with each disposed portion of food waste or associated with food waste in the first food waste receptacle 15 as a whole and identifies the type of food waste and/or categories of food waste. The categorization of food waste may relate to composition of the food waste like the ingredients of a food recipe, nutritional aspects like protein, carbohydrates, fiber, etc., or any situational characterization of the waste that might be relevant where the food waste data is being collected. The trained AI model may include supervised, unsupervised, semi-supervised or generative methods. The training of the AI model could also be initiated by further tuning a pretrained model thereby adapting the model to recognizing and quantifying the food waste and its characteristics. Initially, the AI model may require manual adjustments in controlling the quality aspects of learning and suggesting appropriate ground truth sources within the available sensor data collected within the first type of food waste quantifying device 10; 30. The AI model comprises architectural components of the AI model, parameters of the AI model and hyper-parameters that were utilized to locally train the Al model. AI model information, such as model architecture, determined model parameters such as weights, biases, gradients etc., and model hyper-parameters are later communicated to other first type of food waste quantifying devices 30 or to second type of food waste quantifying devices 20. The model hyper-parameters are a set of values related to the variables with which a machine learning or deep learning model is trained. These hyper-parameters may be needed when sharing the model across multiple devices to ensure reproducibility of the results produced by one model trained on a device by other devices in the network

In the following, and with reference to FIG. 1, embodiments of a second type of food-waste quantifying device 20 for collecting, detecting and quantifying food waste, optimized for sensor interaction is described. The second type of food-waste quantifying device 20 comprises one or more second sensors 21, 22, 23 for capturing data on characteristics of food waste portions that are to be deposited into a second food waste receptacle 25 at the second type of food-waste quantifying device 20. The characteristics may comprise volume and type of food waste.

The one or more second sensors 21, 22, 23 may comprise at least one of a light-based sensor 21 and a sound-based sensor 22 to capture the data on characteristics of food waste portions. The light-based sensor may operate by detecting e.g. one or more of the presence, intensity, reflection, absorption, and transmission of light to monitor environmental changes, measure distance, and/or identify materials. The sound-based sensor 22 may operate by classifying the characteristics of food waste discarded in the second food waste receptacle 25 based on their acoustic signature. The acoustic signature serves as a fingerprint for characterizing specific compositions and characteristics of food waste or any other materials that are discarded in the second food waste receptacle 25. This data from sound-based sensors 22 may later be used either as unique characteristic of disposed waste or for training an AI model with ground truth from the light-based sensors 21.

The one or more second sensors 21, 22, 23 may comprise a weighing scale 23. The weighing scale 23 may be positioned below the mentioned second food waste receptacle 25 so that the first food waste receptacle has its weight on the weighing scale 23. The weighing scale 23 may be operative for determining the weight of a second food waste portion deposited into the second food waste receptacle 25 by comparing the weight of the second food waste receptacle 25 before and after the second food waste portion has been dropped into the second food waste receptacle 25.

The second food waste receptacle 25 may or may not be a part of the second type of food-waste quantifying device 20. In one embodiment, the one or more second sensors 21, 22, 23 are arranged to the second food waste receptacle 25 and delivered together with the second food waste receptacle 25. In another embodiment, the second food waste receptacle 25 is a general food waste receptacle that a site provides at which the second type of food-waste quantifying device 20 is situated.

The second type of food-waste quantifying device 20 further comprises a control unit 28. The one or more second sensors 21, 22, 23 are communicatively connected to the control unit 28. The control unit 28 is operative for collecting input from the one or more second sensors 21, 22, 23, i.e. data on characteristics of food waste captured by the one or more second sensors 21, 22, 23 when food waste is disposed into the second food waste receptacle 25. The control unit 28 is operative for determining the characteristics of the food waste, type of food waste and volume of food waste based on the input collected from the one or more second sensors 21, 22 ,23. The control unit 28 may also be operative for determining density and/or weight of the food based on the sensor input.

The control unit 28 of the second type of food-waste quantifying device 20 is further operative for directly or indirectly communicating information/data with control units 18 of the first type of food-waste quantifying devices 10; 30.

In an embodiment, the second type of food waste quantifying device 20 is not provided with as sophisticated sensors as the first type of food waste quantifying device 10; 30. In other words, second set of characteristics that the one or more second sensors 21, 22, 23 are capable of capturing are fewer number of characteristics than the characteristics that the one or more first sensors 11, 12, 13 are capable of capturing. For example, the second type of food waste quantifying device 20 may have a weighing scale 23 but not any other sensor 21, 22. Alternatively, the second type of food waste quantifying device 20 may have light- and/or sound-based sensors 21, 22 but not any possibility to determine weight. It could also be that the second type of food waste quantifying device 20 may have similar sensors as of first type devices 10: 30 but with a significantly lower resolution and accuracy than the first type devices 10; 30. Further, the weighing scale can be interpreted as a type of sensor. As mentioned, the second type of food waste quantifying device 20 may be arranged to receive information on any of the AI model(s) determined by the one or more first type of devices 10; 30 and use the information on any of the Al models from the one or more first devices 10; 30 to determine characteristics of its own food waste. This may be done without central orchestration.

In other embodiments, the second type of food waste quantifying device 20 may not provided with as much data processing power as the first type of food waste quantifying device 10; 30. Therefore, the first type of food-waste quantifying device 10; 30 is operative for sending AI model information on its trained AI model to the second type of food-waste quantifying device 20. Hereby, the control unit 28 of the at least one second type of food-waste quantifying device 20 is operative for determining type of food waste and volume of food waste for a second portion of food waste that is to be deposited into the second food waste receptacle 25 based on the data of the second set of characteristics captured by the one or more second sensors 21, 22, 23 of the second portion of food waste, as well as by using the AI model information received from the at least one first food-waste quantifying device 10; 30. This means that the second type of device can be made more cost-efficient but as it can received the AI model information of the first, more sophisticated device, it can still determine type of food waste and volume of food waste of its food waste portions. In total, a cost-efficient system for detecting and quantifying food waste is achieved that still can determine type of food waste and volume of food waste in a detailed manner.

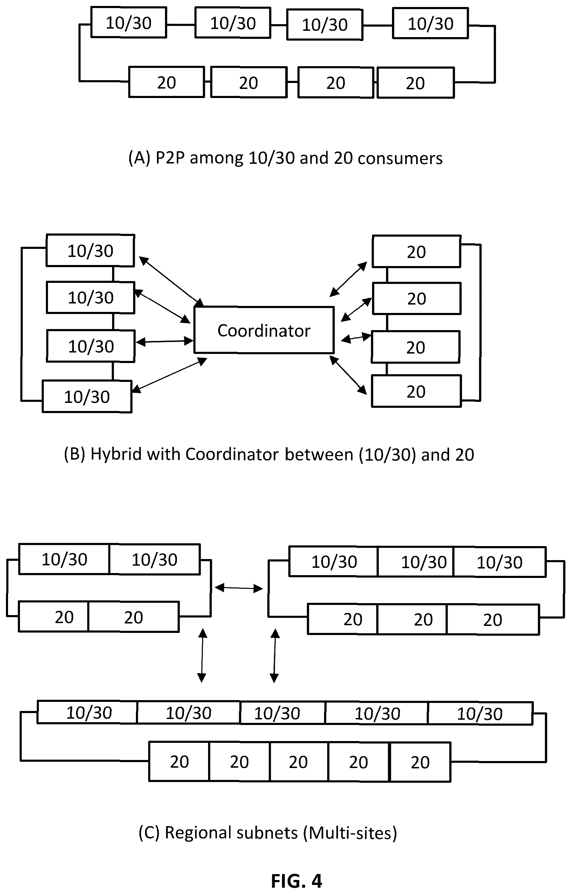

The different first and second types of food waste quantifying devices 10, 20, 30 may be interconnected in a peer-to-peer network, as shown in FIG. 4A. Alternatively, the different first and second types of food waste quantifying devices 10, 20, 30 may be interconnected through a coordinating server, as shown in FIG. 4B. According to a third alternative, the different first and second types of food waste quantifying devices 10, 20, 30 may be arranged in regional subnets. Communication is then performed within the regional subnets and between the regional subnets. According to embodiments, first and/or second type of devices handle asynchronous updates without simultaneous synchronization.

In embodiments, no raw sensor data related to the disposed waste is communicated from the first type of food-waste quantifying device 10 to the second type of food waste quantifying device 20, rather information related to the AI model trained at the first type of device 10.

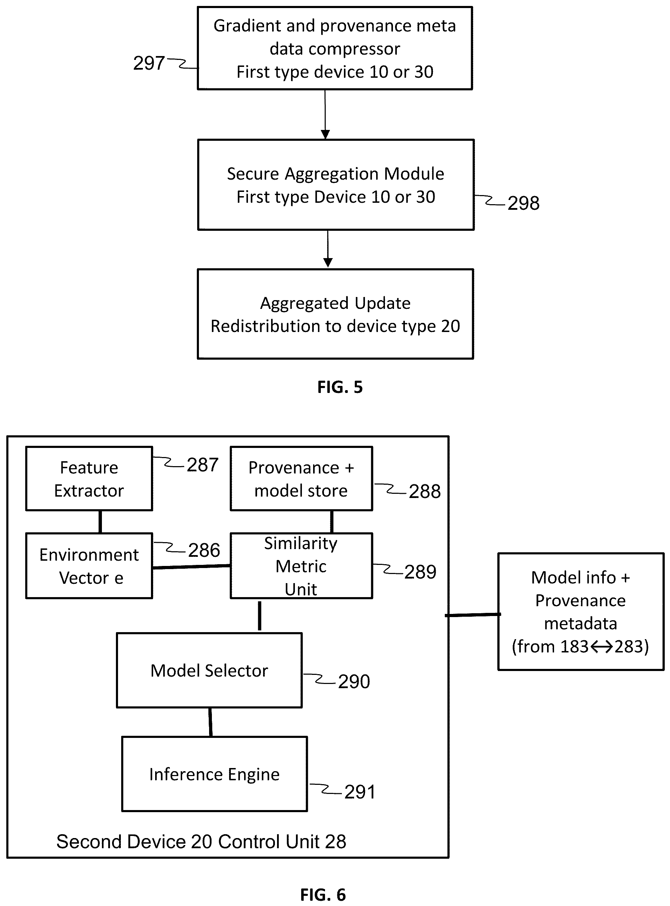

According to another embodiment, the first type of devices 10; 30 of the system may share model parameters or updates, e.g., weights and biases from neural networks, with each other. This information may also include information such as gradients, where the first type of devices 10; 30 compute gradients based on their local AI model training and share these gradients with other first type of devices 10; 30 and with the second one or more second type of devices 20. The gradients provide information on how mature a locally trained model is at a given point of time. A collective model update may then be computed, typically by averaging these model parameters, or any other type of aggregating operations that would improve the performance of the model across the system. Another method that may be used is model averaging, where one first type of device 10 averages its AI model with another first type of device 30, for example periodically, to converge towards an improved AI model that reflects the collective learning of the first type of devices 10, 30 of the system. The system may be designed to handle asynchronous updates, where the first type of devices 10, 30 do not need to synchronize their updates simultaneously. This flexibility is advantageous for maintaining system efficiency and ensuring that the system is robust against disruptions or variations in device availability. Devices may apply gradient compression 297 and secure aggregation 298 prior to redistribution (see Fig. 5).

According to embodiments, the training of an AI model is an iterative process in which the amount of information that the AI model is trained on is increased with increasing number of portions of food waste that is analyzed, whereby the AI model gets better the more portions of food waste that are received and analyzed. The AI model is software that may be stored on the device, for example in a memory of the control unit 18.

According to other embodiments, any of the one or more first sensors 11, 12, 13 and optionally any of the one or more second sensors 21, 22, 23 may comprise a Time-of-Flight (ToF) sensor and/or a stereo camera setup that calculates the time taken for light to travel to an object and reflects to the sensor or the depth between two image points. Using such sensors allows for precise measurement of distance between the sensor and the disposed food waste in three-dimensional space enabling the estimation of volume and densities. The mass/weight of the disposed food waste could be calculated from the volume estimated from the light sensor data and known density of the disposed food waste. An alternative method to estimate the mass from light sensor data is to train an AI model using raw 3D volumetric data points to the ground truth from weight sensor. The densities could also be estimated utilizing the volume and weight data in situations where both data from light and weight are available. The weight of the disposed food waste can be accurately estimated by employing a pre-calibration process that correlates the height of material fill within the waste bin to its corresponding weight. During the disposal process, the fill height of the bin is continuously monitored using visual markers read from light-based sensors. Based on the detected height, the volume of the material within the bin is calculated. This method relies on the principle of volumetric weight estimation, where the volume of material (determined by the height of fill) is multiplied by the pre-determined density of the specific food waste being disposed of.

Further, the first type of device may use information on determined AI models obtained from another device of the first type of devices for increasing the quality and convergence of its own AI training model. In other words, the AI models are trained in the first type of devices, e.g., the devices where a sensor exists, and the sensor information is used as ground truth for training the model and the models are published across the system. The second type of devices that lack these sensors can still be able to recognize and quantify the characteristics of food waste by consuming these models available across the system. In other words, the second type of device 20 may determine data on a second set of characteristics of the food waste, such as a subset of the characteristics determinable by the first type of device 10; 30, and use the data on the subset of characteristics as well as the information on the trained AI model obtained from a first type of device to determine other characteristics of the food waste that it could not determine from its own sensors. The other characteristics may be defined as the difference between the set of characteristics determinable by the first device and the second set of characteristics determinable by the second device.

In some embodiments, the first type of food waste quantifying device 10, 30 can determine characteristics of the food waste in its enclosure utilizing, except for sensor data and/or weight information, external information of type of food served at the site in which the device is implemented. The information on the type of food served in the site may originate from manual input or from a digital menu of the site, etc. In other words, the control unit 18 of each at least one first type of food waste quantifying device 10; 30 is operative for the determining of type of food waste and volume of food waste for the first portion of food waste deposited into the first food waste receptacle 15 also based on information on food served in a site from which the first food waste portion originates. Preferably, information on the time when the menu was used in the site is also provided and matched with information of time when the portions of food waste were deposited. In an embodiment, the control unit 28 of the second type of food waste quantifying device 20 can also be operative for the determining of type of food waste and volume of food waste based on information on food served in a site from which the second food waste portions originate.

Fig. 6 describes the control unit 28 of the respective second type of device 20 that decides strategy for aggregating and/or implementing available AI models. In some embodiments, each AI model from communication units 183 and 283 is accompanied by provenance metadata encoding environment features such as illumination statistics, receptacle geometry, liner color, ambient noise profile, and common dish classes. The control unit 28 of the second type of device 20 computes a local environment vector from a local environment feature extractor 287 and selects, from previously available models of a provenance model store 288, a model by a model selector 290 that minimizes a defined distance or similarity metric 289 relative to a local environment vector 286. A confidence score is computed for each inference by an inference engine 291 and, when below a threshold, the second device 20 requests an alternative model and/or adjusts multimodal fusion weights or performs student-model refinement using received teacher artifacts.

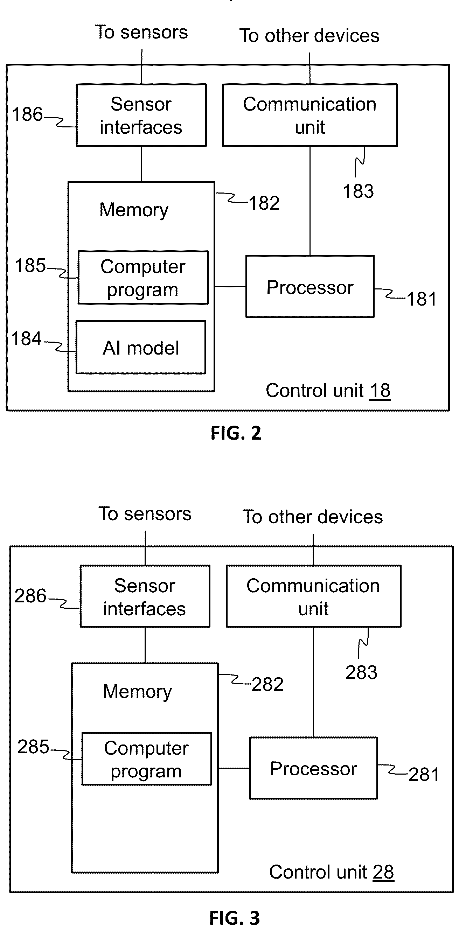

Fig. 2 describes a control unit 18 of the first type of food-waste quantifying device 10; 30 in more detail. The control unit 18, aka first control unit 18, comprises a processor 181, a memory 182 and a communication unit 183. In the memory 182 there is stored one or more computer programs 185, whereby the first control unit 18 is operative for training an AI model 184 using data on characteristics of food waste captured by the one or more first sensors 11, 12, 13 over time for a large amount of food waste portions deposited into the first food waste receptacle 15 over time, to determine type of food waste and volume of food waste for each of the large amount of portions of food waste, and for determining type of food waste and volume of food waste for a first food waste portion deposited into the first food waste receptacle 15 after the large amount of food waste portions have been deposited, based on data on characteristics of the first food waste portion captured by the one or more first sensors 11, 12, 13 and by using data from the trained AI model 184. The AI model 184 may be stored in the memory 182. The first control unit 18 may also comprise one or more sensor interfaces 186 for communicating with the one or more first sensors 11, 12, 13. The first control unit 18 is further operative for sending AI model information on its trained AI model 184 to the at least one second type of food-waste quantifying device 20 through the communication unit 183. The communication unit 183 may be capable of communicating via wireline or wirelessly with the second type of food waste quantifying device 20 and/or with other first type of food waste quantifying devices 10; 30. The first control unit 18 is further operative for storing the captured data received from the one or more first sensors 11, 12, 13 together with the determined volume and food type in its memory 182.

Fig. 3 describes a control unit 28 of the second type of food-waste quantifying device 20 in more detail. The control unit 28, aka second control unit 28, comprises a processor 281, a memory 282 and a communication unit 283. In the memory 282 there are stored one or more computer programs 285, whereby the second control unit 28 is operative for determining type of food waste and volume of food waste for a second portion of food waste that is to be deposited into the second food waste receptacle 25 based on data of the second set of characteristics captured by the one or more second sensors (21, 22, 23) of the second portion of food waste, as well as by using the AI model information received from the at least one first food-waste quantifying device 10; 30. The second control unit 28 may also comprise one or more sensor interfaces 286 for communicating with the one or more second sensors 21, 22, 23. The second control unit 28 is further operative for receiving AI model information from the at least one first type of food-waste quantifying device 10 through the communication unit 283. The communication unit 283 may be capable of communicating via wireline or wirelessly with the one or more first type of food waste quantifying devices 10; 30. The second control unit 28 is further operative for storing the captured data received from the one or more second sensors 21, 22, 23 together with the determined volume and food type in its memory 282.

In a distributed learning scenario, the one or more first and second types of food waste quantifying devices 10, 20, and 30 described may function as part of a broader network of similar devices, all contributing to a collective understanding or management of food waste, using machine learning techniques. Thus, a subset or all of the first type of devices 10, 30 in the network continuously exchange AI models that are trained locally at each first type of device 10, 30 with each other with an aim to continuously improve the accuracy in identifying the type and categories of food waste, estimate the depth/volume of food waste in the enclosure, estimate the density of the food waste in the enclosure and weight of the food waste associated with each disposal or the total weight of the waste holding enclosure.

A notable difference to traditional machine learning methods and systems is that raw training data does not leave the first type of devices 10; 30 when sharing data on the AI models. Another notable difference is that there is no central training of the AI models. Rather, the intelligence for identifying, quantifying and predicting food waste thus resides distributed in the network or system of food waste quantifying devices. A notable difference with some embodiments is that the second type of food waste quantifying devices 20 in the system can do without the same advances sensors for quantifying and characterizing the waste as the first type of food waste quantifying devices 10, 30. A device of the one or more second type of devices 20 consuming data of an AI model may independently choose data of an AI model from one of the first type of food waste quantifying devices 10, 30 that is proven to be accurate in similar conditions as its own. As each first type of device 10, 30 learns from its local environment and shares its insights, the entire system becomes smarter. This collective intelligence is a powerful advantage of distributed learning, allowing the system to benefit from diverse data sources and learning experiences, thereby enhancing the overall accuracy and efficiency of the system.

Security measures may be critical to ensure that data exchanges across the system, i.e. between the first and second type of devices 10, 20, 30 of the system are secure and that only legitimate updates are applied to models. Techniques such as encryption, secure multi-party computation, and blockchain-like protocols can be employed to secure communications and validate model updates.

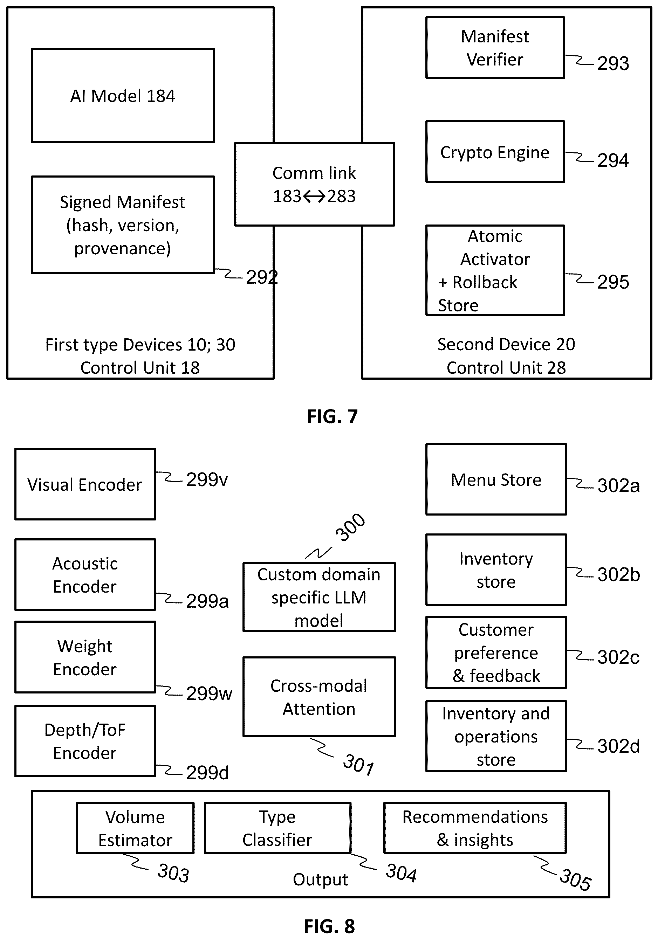

In certain embodiments shown in FIG. 7, a model update distributed from a first type device 10; 30 (e.g., via the communication link 183↔283) is accompanied by a signed manifest 292 comprising at least: (i) a cryptographic digest of the update payload (e.g., a hash of model weights, configuration and metadata), (ii) a version identifier (e.g., monotonically increasing semantic or build version), and (iii) provenance metadata identifying the originator device, training context and/or environmental conditions of generation. On receipt at a second type device 20, a manifest verifier 293 of the control unit 28 parses the signed manifest 292, authenticates the signer using a trust anchor or certificate chain resident locally, and reconstructs a digest over the received payload. A crypto engine 294 validates that the reconstructed digest matches the manifest digest and verifies the signature (e.g., ECDSA, Ed25519, or equivalent), optionally including freshness checks such as a timestamp, nonce and/or replay-protection counter.

If and only if the validation succeeds, an atomic activator 295 stages the update into a non-active slot (e.g., A/B partition or sandboxed model store) and performs an atomic switch of the active pointer upon successful health checks (e.g., structural integrity checks, smoke-test inference on canonical inputs, or policy compliance with site constraints). The device maintains a rollback store retaining at least the immediately prior active version and its manifest such that, upon verification failure, failed health check, or runtime degradation events, the control unit 28 reverts to the prior version without loss of service and records the failure in non-volatile logs. In some embodiments, rollback is gated by a policy that prevents re-activation of any version flagged as compromised or revoked by a key revocation list.

The manifest verifier 293 may enforce version monotonicity (e.g., rejecting updates whose version is less than a locally stored minimum acceptable version), issuer and audience restrictions (e.g., manifest "aud" matching the device class), and key-lifecycle policies (e.g., validity interval, revocation status and key rotation windows). Provenance metadata in the manifest 292 can include a model lineage identifier, site class or environmental cluster used during training, and a digest of the training recipe, thereby enabling compatibility or de-risking checks prior to activation. In certain implementations, parts of the verification (e.g., key handling and signature checks) execute inside a secure element or trusted execution environment of the control unit 28, while bulk hashing executes on a general-purpose processor for performance.

In alternative embodiments, the manifest 292 additionally contains a dependency list (e.g., required pre-trained encoders or calibration packs) and a policy declaration (e.g., acceptable sensor configurations), wherein the atomic activator 295 enforces such dependencies prior to activation. Where bandwidth or availability constraints exist, the control unit 28 can fetch the update and manifest via separate channels (e.g., payload via content distribution, signature and keys via a control channel), with the crypto engine 294 binding them by digest to prevent substitution. Error conditions-including signature mismatch, digest mismatch, expired or revoked certificate, missing dependency, or failed health check-cause the activator 295 to abort activation, preserve the prior version in the rollback store, and emit a telemetry record for audit.

The system may be designed to be scalable so that it can handle increases in the number of first and/or second types of devices 10, 20, 30 without significant impacts on performance. It may also be fault-tolerant, capable of coping with device failures or network disruptions without losing the ability to function effectively.

The system may integrate multimodal artificial intelligence to correlate food waste data with a menu, inventory, customer, and operational information. For example, if lasagna was served at lunch and 2 kg of pasta waste is detected by the sensors, the system correlates the waste with that menu item, identifies its ingredients and environmental footprint, and considers customer feedback or preference data, such as, portion too large, taste too salty, to generate more contextual and actionable recommendations.

A hybrid AI architecture may combine a pretrained multimodal foundational model for efficient representation learning with a custom domain-specific large language model (LLM) fine-tuned for food waste detection, classification, and behavioral reasoning. Foundational models provide robust embeddings across images and text, while the custom LLM incorporates customer preference intelligence and adaptive inference to understand behavioral patterns behind waste generation.

According to an embodiment, the one or more first type of devices 10, 30 may comprise a foundational AI model that projects both visual and textual inputs into a shared embedding space. This enables high-fidelity similarity matching between waste samples and menu items and user sentiment, while reducing custom training time and data requirements. In other words, by the AI model comprising such a foundational model, semantic distances between images and textual concepts can be determined. Hereby, the first type of device 10 can distinguish, for example, between an image of just potatoes and an image of a dog and a potato and then aligning more closely with the concept "potato" for the former image.

According to an embodiment described in FIG. 8, the system comprises a Custom Domain-Specific Large Language Model (LLM) 300. The Custom Domain-Specific LLM is trained on curated datasets encompassing one or more of: Food waste images and contextual metadata (time, source, location, context etc.,); Menu items, ingredients, nutritional compositions and allergen data; Environmental impact indicators (e.g., CO₂-equivalent, water footprint), and customer metadata and preference data, including satisfaction scores, comments, historical consumption patterns, and dietary profiles. The Custom Domain-Specific LLM 300 may hereby: Map waste images to menu items and correlates results with customer preferences; Infer likely causes of avoidable waste (e.g., portion size, taste aversion, repetition; Identify trends across customer segments (e.g., vegetarian dishes with higher acceptance rates); generate operational and behavioral recommendations, such as adjusting recipes, portion sizes, or menu rotation frequency, and adapts predictions using site- and demographic-specific data via continuous learning. The Custom Domain-Specific LLM 300 may be situated at at least one of the first type of devices 10, 30 or second type of devices 20

According to another embodiment, the system comprises an embedding fusion and reasoning engine, which integrates multimodal embeddings, from e.g., foundational models, with textual and sensor inputs processed by the Custom Domain-Specific LLM 300 (see Fig. 8). The embedding fusion and reasoning engine may hereby employ cross-modal attention to combine vision, text, and sensor data, performs contextual reasoning to refine waste classification and menu mapping, and produces interpretable outputs with confidence scores for each inferred attribute. The Embedding Fusion and Reasoning Engine may be situated at least on one of the first type of devices 10, 30 or second type of device 20.

In certain embodiments, the Embedding Fusion and Reasoning Engine comprises a cross-modal attention module 301 operative to fuse embeddings produced by a visual encoder 299v, an acoustic encoder 299a, a weight-sensor encoder 299w, and an optional depth/ToF encoder 299d. The fused representation is provided to a volume estimator 303 and a type classifier 304 which, respectively, output a volume estimate and a food-waste type. The fused representation and/or the estimator outputs are further supplied as contextual features to a Custom Domain-Specific LLM 300.

The Custom Domain-Specific LLM 300 is configured to ingest textual and tabular stores comprising one or more of: a menu store 302a (menu items, ingredients, allergens), an inventory store 302b (stock levels, batch information), a customer/preference store 302c (satisfaction scores, comments, historical consumption, dietary profiles), and an operations store 302d (service time, station, staffing, line speed). Using these inputs, the LLM 300 performs behavioral reasoning to infer likely causes of avoidable waste (including portion sizing, flavor aversion, repetition, or presentation) and to produce recommendations and insights 305 with associated confidence scores, such as adjustments to portion size, recipe composition, or menu rotation frequency.

In some implementations, the cross-modal attention 301 computes attention weights over modality-specific tokens (e.g., vision patches, acoustic frames, weight/density features and depth cues) subject to gating by context derived from the LLM 300 (e.g., current menu item embeddings, site profile). Conversely, the LLM 300 can be conditioned on embeddings or intermediate activations from 301 so that textual reasoning reflects sensor-observed waste properties. The coupling between 300 and 301 may be uni- or bi-directional and may be trained end-to-end or via alternating updates.

The engine may output, for each waste portion, a tuple including at least: (i) type label from 304, (ii) volume estimate from 303, (iii) a linkage score to one or more menu items from 302a, and (iv) a ranked set of operational or behavioral recommendations 305 with confidence values. These outputs may be logged to the first type of devices 10: 30 and/or second device 20 and/or surfaced to kitchen or procurement systems for closed-loop optimization.

According to another embodiment, the system comprises a Food Waste Characterization Module, which may extend the system's functionality beyond detection and quantification to semantic and nutritional characterization of waste. The Food Waste Characterization Module may hereby classify food waste according to following Classification Dimensions:
Avoidability: avoidable edible waste resulting from overproduction or plate returns or unavoidable inedible byproducts (bones, shells, peels). Determined via visual cues, menu correlations, and contextual metadata.
Source Attribution: Plate Waste - uneaten customer portions, Preparation Waste - trimming, overcooking, or spoilage during prep, or Storage Waste - expired or spoiled ingredients before use. This classification may be inferred from time, location, and waste texture characteristics.
Nutritional Characterization: Estimated loss of calories, protein, fat, carbohydrates, and micronutrients. This may be computed by linking detected waste to menu-level nutritional databases and multiplying by measured weight.
Environmental Impact Estimation: Retrieving CO₂-emission, water, and cost factors per ingredient to compute sustainability metrics, and generating a composite Food Waste Impact Index for monitoring and reporting.

A following system flow may be achieved: 1. A food waste image is captured by one of the first sensors 11, 12, 13 being a camera 2. The image is embedded using a pretrained vision encoder 299v. 3. Menu descriptions and inventory data are embedded using a text encoder. 4. Data from the one or more first sensors and metadata, such as weight, timestamp, food waste receptacle ID, etc., are fused with the embeddings. 5. The Custom Domain-Specific LLM 300 processes the fused representations to identify the most probable item in the menu e.g., "Chicken Curry with Rice". 6. The Food waste Characterization Module classifies waste type, avoidability, and source, and computes nutritional and environmental metrics. 7. The Custom Domain-Specific LLM 310 generates recommendations such as adjusting portion sizes or modifying preparation volumes.

According to an embodiment, data captured by multiple first and second sensors 11, 12, 13, 21, 22, 23 improves the accuracy of food waste characterization of the respective first and second type of device 10, 20 , 30. For example, if a weight sensor detects 300g and a sound sensor of the same food waste quantifying device 10, 20, 30 identifies a soft impact, the system can infer the presence of soft food like pasta. Fusion algorithms of the respective first and second control unit 18, 28 may use weighted averages or machine learning models to reconcile conflicting sensor inputs.

According to another embodiment, the AI model of the respective one or more first type of food waste quantifying device 10, 30 is optimized for low-power devices using techniques like quantization, which reduces precision of weights, pruning, which removes redundant neurons, and model distillation, which can be used to train smaller AI models to mimic larger AI modes. For instance, a convolutional neural network trained on food images on a stationary GPU cluster can be compressed to run on a Nvidia Jetson, Odroid, Raspberry Pi or similar embedded computing boards or devices without losing significant accuracy.

According to another embodiment, sensors of the first and second sensors 11, 12, 13, 21, 22, 23 are calibrated using known reference materials. Calibrations can also be performed for the environmental conditions for the waste collection. This includes calibration to color, shape and material of the food waste receptacle 15, 25 or additional materials like paper or plastic bags placed inside the food waste receptacle 15, 25. Calibration may also be performed with respect to the light conditions.

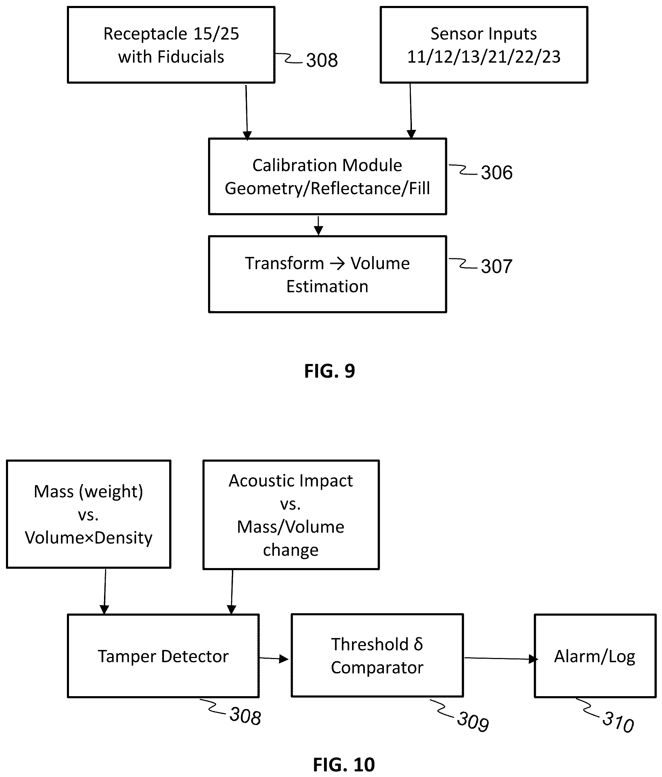

In an embodiment described in FIG. 9, a calibration module 306 implements a multi-stage procedure that derives geometric, photometric, and receptacle-state parameters for use by a transform and inference stage 307 and a volume estimation engine. The procedure utilizes fiducial references 308 disposed on or proximate to the first and/or second receptacle 15; 25 and/or on a liner positioned within the receptacle. The fiducials 308 define a known metric baseline and planar (or non-planar) geometry enabling recovery of camera intrinsics and extrinsics, correction of lens distortion, and estimation of sensor pose relative to the receptacle coordinate frame. From images or depth maps acquired by the one or more first and/or second sensors 11, 12, 13; 21, 22, 23, the calibration module 306 computes a pixel-to-metric scale factor, per-ray depth bias corrections (for ToF or stereo), and a receptacle wall model (shape, taper, corner fillets) that together parameterize a mapping from sensed surfaces of waste material to a three-dimensional occupancy volume of the receptacle.

The calibration module 306 further performs reflectance and illumination compensation. Reference patches of known reflectance and color temperature may be integrated into the fiducials 308 and are imaged under ambient and/or controlled illumination. Using these references, the module estimates vignetting, white-balance, illumination directionality, and dynamic range thresholds, yielding per-frame normalization coefficients that stabilize segmentation and depth recovery across varying light conditions. For sound-based sensors 12; 22, the module may capture one or more acoustic calibration events (e.g., dropping standard masses or materials) to fit impulse-response and frequency-dependent gain models, thereby compensating for enclosure resonance and ambient noise. The resulting photometric and acoustic compensation parameters are time-stamped, versioned, and stored in association with the receptacle identifier for subsequent application by the transform stage 307.

Receptacle-specific compensation accounts for liners (e.g., paper or plastic bags) and their optical or mechanical effects. The calibration module 306 detects liner presence, thickness class, and slack by analyzing fiducial occlusion patterns and specular responses; it then generates occlusion masks and elastic-deformation priors that are propagated to the transform stage 307. In embodiments, bag crumple and sag are modeled as a boundary condition that constrains the admissible surface of the waste volume, improving accuracy at partial fills and during non-uniform loading. Where weighing scales 13; 23 are available, the module fuses geometric volume estimates of reference materials with weight measurements to fit or update density look-up tables, thereby enabling cross-checks and drift detection.

The calibration may be executed (i) on installation, (ii) opportunistically at power-up or at scheduled intervals, and/or (iii) adaptively upon detection of state changes, such as fiducial displacement, persistent illumination shifts, temperature or humidity changes, or deviations between predicted and measured weight. A self-test routine injects synthetic targets (e.g., rendered fiducial overlays) and compares expected against observed residuals to decide whether to trigger re-calibration. Calibration outputs include: (a) a receptacle geometry model and coordinate transform; (b) sensor pose and distortion parameters; (c) photometric and acoustic compensation coefficients; (d) liner/occlusion masks; and (e) an uncertainty model. These outputs are consumed by the transform stage 307, which converts raw sensor observations into a calibrated point cloud or depth surface, and by a volume estimation engine of the transform stage 307, which integrates the surface within the receptacle geometry to compute fill height, partial-volume by region, and confidence bounds. The adaptive thresholds are learned per receptacle identity, fill level, bag presence, ambient conditions, or site profile, are tightened after calibration and relaxed with drift compensation between calibrations, and incorporate change-point detection and outlier tests.

In distributed deployments, calibration artifacts (including but not limited to geometry models, compensation coefficients, and uncertainty descriptors) may be shared from a first type device 10; 30 to a second type device 20 operating under similar receptacle and environmental conditions, thereby reducing per-site calibration time. The receiving device validates compatibility using fiducial recognition and environment hashes before applying the shared artifacts. Calibration states are recorded as immutable records with version identifiers and effective time ranges so that subsequent AI inferences can be audited or re-scored relative to the calibration in force at the time of acquisition.

Figure 9 schematically illustrates an example data flow in which the receptacle and fiducials 305 and sensor inputs 11/12/13/21/22/23 feed the calibration module 306; the transform stage 307 applies the calibration to produce a metrically consistent representation that is consumed by the volume estimation engine.

The system may also adjust to changes in lighting, noise, or food waste receptacle fill levels. For example, if ambient light drops below a threshold, one of the first or second sensors being a camera switches to infrared mode or additional light is provided though an illuminating device which may not be switched on all the time. Also, adaptive thresholds and dynamic normalization may be used to ensure consistent performance across environments.

The system may detect tampering by monitoring consistency of the one or more first sensors 11, 12, 13 and/or the one or more second sensors 21, 22, 23. For instance, if a weight sensor shows sudden spikes without corresponding visual changes, it may indicate manipulation or malfunction. Alerts for such indication of manipulation or malfunction are then triggered and logged.

In some embodiments shown in FIG. 10, a tamper detector 308 is configured to perform cross-modal consistency checks between heterogeneous sensor modalities to detect manipulation, malfunction, or fraud. The tamper detector 308 receives (i) a measured mass or weight signal m_meas(t) from a weighing scale; (ii) an estimated mass signal m_est(t)=ρ̂·V̂(t) derived from an estimated density ρ̂ and a volume estimate V(t) obtained from light-based depth/ToF imaging and/or stereo reconstruction; and (iii) one or more acoustic impact features A(t) that are extracted from transient sound events during waste deposition. The tamper detector 308 computes one or more residuals, including a mass-consistency residual e_m(t)=|m_meas(t)-m_est(t)| and a deposition-consistency residual e_a(t)=|Δm_meas(t)-*f*(A(t),ΔV̂(t))|, where *f*(·) maps acoustic/visual transients to a predicted mass/volume change. When any residual exceeds an adaptive threshold δ maintained by a threshold comparator 309, the event is flagged as a suspected manipulation or malfunction. The threshold comparator 309 may implement absolute and relative thresholds, hysteresis, and time-window integration to suppress spurious triggers while preserving sensitivity to abrupt inconsistencies. Alerts and associated diagnostics are forwarded to an alarm/log unit 310 for notification and secure audit trail creation.

The thresholds used by the threshold comparator 309 may be static, device-specific, or adaptively learned per receptacle identity, fill level, bag presence, ambient conditions, or site profile. In one implementation, δ is tightened immediately after a calibration cycle and gradually relaxed with drift compensation between calibrations. Statistical change-point detection (e.g., CUSUM), outlier tests (e.g., Grubbs or MAD), and residual-based observers (e.g., a Kalman filter with innovation monitoring) may be applied to detect inconsistent sensor behavior. The tamper detector 308 may additionally monitor: (a) negative weight steps absent corresponding removal events detected visually; (b) repeated micro-oscillations of weight with no acoustic or visual correlate; (c) weight spikes when the field of view indicates an empty chute; (d) sustained drift beyond a learned bias band; and (e) receptacle removal or off-axis loading inferred from multi-point load cells or image pose estimation.

In response to a confirmed tamper condition, the alarm/log unit 310 raises a graded notification (e.g., warning, alarm, lockout) locally via HMI/LED/buzzer and/or remotely via the communication unit, and records an event tuple comprising at least a timestamp, device ID, receptacle ID, residual metrics {e_m,e_a}, raw/processed sensor snippets around the event, threshold values in force, and computed confidence scores. The log record may be hashed and digitally signed to ensure integrity and non-repudiation and may be synchronized to a peer or supervisory node when connectivity is available. The control unit may temporarily quarantine affected measurements, mark them with a "tamper-suspect" quality flag, and fall back to a safe-mode estimation pathway (e.g., volume-only or weight-only) until the condition clears or a service action is performed.

The tamper detector 308 may execute periodic self-tests, including reference-mass application, optical fiducial checks, acoustic loopback, and power-on sensor bias characterization. Health indicators from these tests are incorporated into the cross-modal decision logic so that the threshold comparator 309 discriminates between environmental disturbances and actual manipulation. Service personnel may be prompted through a guided calibration routine when health indicators degrade below a maintenance threshold.

According to an embodiment, the cross-modal checks include time alignment of sensed transients. A deposition is expected to produce a co-occurring sequence: an acoustic impulse above an amplitude floor, a monotonic increase in V(t), and a non-negative weight step Δm_meas≥0. If this temporal ordering is violated, e.g., a mass increase without an acoustic/visual correlate or an acoustic impulse without mass/volume change, the tamper detector 308 asserts a tamper hypothesis with a confidence score that is compared to the threshold δ by the threshold comparator 309. Multiple low-confidence anomalies within a rolling window may be combined using a voting or score-fusion scheme to reach the alarm threshold.

In further embodiments, the alarm/log unit 310 can trigger protective actions, such as disabling model updates sourced from suspect data, rejecting peer-to-peer model contributions originating from devices concurrently reporting tamper conditions, or requiring dual-validation (e.g., operator badge plus image snapshot) before resuming normal operation. Firmware may support remote attestation so that tamper events are linked to a device's verified software state.

In certain embodiments, model update governance is performed at a network layer using a blockchain-like, append-only ledger. An originating first-type device 10; 30 computes a cryptographic digest (e.g., SHA-256) over an update payload and its signed manifest 292 and submits an update record to a shared ledger. Peer devices validate the record by verifying the signer's identity and digest correspondence, and on acceptance append the record to the ledger, thereby establishing a tamper-evident, time-ordered history of model lineage and provenance. A receiving first or second type of device 20; 10; 30 adopts an update only if (i) the device-local checks of [0041]-[0041d] succeed (manifest verification by verifier 293 and crypto engine 294, version monotonicity, dependency policy), and (ii) the update's ledger inclusion and confirmation status satisfy a policy (e.g., threshold number of peer attestations or confirmations). The atomic activator 295 then executes an A/B slot switch contingent on these network-level preconditions, while rollback is preserved for health-check failures, with the ledger retaining a permanent audit record for revocation, dispute resolution, and fleet-wide forensics. Updates failing at least one of signature verification, digest match, credential validity, dependency satisfaction, health checks, or version monotonicity are rejected, recorded in non-volatile audit logs, and barred from re-activation.

In some embodiments, subsets of raw or processed sensor data may optionally be exported for benchmarking, offline evaluation, or centralized baseline training; such optional export does not limit the distributed learning embodiments herein.

## Claims

1. A system for detecting and quantifying food waste, comprising:
at least one first type of food-waste quantifying device (10; 30), each at least one first type of food waste quantifying device (10; 30) comprising:
one or more first sensors (11, 12, 13) for capturing data on characteristics of food waste portions that are to be deposited into a first food waste receptacle (15) at the first type of food-waste quantifying device (10; 30);
a control unit (18) comprising a processor (181) and a memory (182), the control unit (18) being operative for:
training an AI model (184) using data on characteristics of food waste captured by the one or more first sensors (11, 12, 13) over time for a large amount of food waste portions deposited into the first food waste receptacle (15) over time, to determine type of food waste and volume of food waste for each of the large amount of portions of food waste, and
determining type of food waste and volume of food waste for a first food waste portion deposited into the first food waste receptacle (15) after the large amount of food waste portions have been deposited, based on data on characteristics of the first food waste portion captured by the one or more first sensors (11, 12, 13) and by using data from the trained AI model (184),
the control unit (18) further comprises:
a communication unit (183) for communication with at least one second type of food-waste quantifying device (20),
the system further comprising:
the at least one second type of food-waste quantifying device (20), each at least one second type of food waste quantifying device (20) comprising: one or more second sensors (21, 22, 23) for capturing data on a second set of characteristics of food waste portions that are to be deposited into a second food waste receptacle (25) at the at least one second type of food-waste quantifying device (20);
a communication unit (283) for communication with at least the at least one first type of food-waste quantifying device (10; 30), and
a control unit (28) comprising a processor (281) and a memory (282),
wherein the at least one first type of food-waste quantifying device (10; 30) is operative for sending AI model information on its trained AI model (184) to the at least one second type of food-waste quantifying device (20) via its communication unit (183),
wherein the control unit (28) of the at least one second type of food-waste quantifying device (20) is operative for determining type of food waste and volume of food waste for a second portion of food waste that is to be deposited into the second food waste receptacle (25) based on the data of the second set of characteristics captured by the one or more second sensors (21, 22, 23) of the second portion of food waste, and based on the AI model information received from the at least one first food-waste quantifying device (10; 30).

2. System according to claim 1, wherein the one or more first sensors (11, 12, 13) of each at least one first type of food waste quantifying device (10; 30) comprises at least one of a light-based sensors (11) and a sound-based sensors (12) to capture the data on characteristics of food waste portions, and, optionally, wherein the one or more second sensors (21, 22, 23) of each at least one second type of food waste quantifying device (20) comprises at least one of a light-based sensor (21) and a sound-based sensor (22) to capture the data on characteristics of food waste portions.

3. System according to claim 1 or 2, wherein the one or more first sensors (11, 12, 13) of each at least one first type of food waste quantifying device (10; 30) comprises a weighing scale (13) for determining weight of the food waste portions that are to be deposited into the first food waste receptacle (15), and, optionally, wherein the one or more second sensors (21, 22, 23) of each at least one second type of food waste quantifying device (20) comprises a weighing scale (23) for determining weight of the food waste portions that are to be deposited into the second food waste receptacle (25).

4. System according to any of the preceding claims, wherein the control unit (18) of each of the at least one first type of food waste quantifying device (10; 30) is operative for the determining of type of food waste and volume of food waste for the first food waste portion by determining which parts of a total volume of the first food waste portion that is of which type of food waste and how large share of the total volume of the first food waste portion that each type of food waste of the first food waste portion fills, based on the characteristics of the first food waste portion captured by the one or more first sensors (11, 12, 13) and by using (the data from) the trained AI model (184).

5. System according to any of the preceding claims, wherein the control unit (18) of each at least one first type of food waste quantifying device (10; 30) is operative for the determining of type of food waste and volume of food waste for the first portion also based on information on food served in a site from which the first food waste portion originates, and, optionally, wherein the control unit (28) of the second type of food waste quantifying device (20) is operative for the determining of type of food waste and volume of food waste also based on information on food served in a site from which the second food waste portion originates.

6. System according to any of the preceding claims, wherein the second set of characteristics that the one or more second sensors (21, 22, 23) are capable of capturing are fewer number of characteristics than the characteristics that the one or more first sensors (11, 12, 13) are capable of capturing.

7. System according to any of the preceding claims, wherein the control unit (18) of a first (10) of the at least one first type of food waste quantifying device (10, 30) is arranged to send information on its trained AI model to a second (30) of the at least one first type of food waste quantifying device (10, 30), and wherein the control unit (18) of the second (30) of the at least one first type of food waste quantifying device (10, 30) is arranged to receive, through its communication unit (183), the information on the AI model trained by the first (10) of the at least one first type of food waste quantifying device (10, 30) and to update its own trained AI model with the information on the AI model received from the first (10) of the at least one first type of food waste quantifying device (10, 30).

8. System according to any of the preceding claims, wherein the one or more first sensors (11, 12, 13) of each at least one first type of food waste quantifying device (10; 30) comprises at least one light-based sensor (11) and at least one sound-based sensor (12) to capture the data on characteristics of food waste portions, wherein the control unit (18) of the at least one first type of food waste quantifying device (10; 30) comprises:
an embedding fusion and reasoning engine (301) configured to fuse the data on characteristics of food waste captured by the at least one light-based sensor and the data on characteristics of food waste captured by the at least one sound-based sensor (12) to produce a joint representation of food waste,
wherein the control unit (18) of the at least one first type of food waste quantifying device (10; 30) is operative for the determining of type of food waste and volume of food waste for a first food waste portion deposited into the first food waste receptacle (15) based on the joint representation of food waste produced by the embedded fusion and reasoning engine (301).

9. System according to claim 8, wherein the control unit (18) of the at least one first type of food waste quantifying device (10; 30) further comprises a Custom Domain-Specific Large Language Model (300) configured to obtain at least one of: a menu store (320a), an inventory store (320b), a customer/preference store (320c), and an operations store (320d), and to determine and output recommendations (305) based on the produced joint representation of food waste and the obtained at least one of: a menu store (320a), an inventory store (320b), a customer/preference store (320c) and an operations store (320d).

10. System according to any of the preceding claims, wherein the control unit (18) of the at least one first type of food waste quantifying device (10; 30) further comprises:
a volume estimation engine (303),
a calibration module (306) and
a transform stage (307),
wherein the calibration module (306) is configured to use output from fiducial references (305) disposed on or proximate to the first food waste receptacle (15) and/or from a liner positioned within the first food waste receptacle (15) to derive at least one of calibration data comprising: camera intrinsics and extrinsics, lens distortion parameters, sensor pose, pixel-to-metric scale factors, depth bias corrections, and a receptacle geometry model, and to output the derived calibration data,
wherein the transform stage (307) is configured to apply the derived calibration data on the data on characteristics of food waste captured by the one or more first sensors (11, 12, 13) or the encoded representation of the sensor data (299v, 299a, 299w, 299d) to obtain a metrically consistent representation,
wherein the volume estimation engine (303) is configured for estimating fill height and/or volume of food waste in the first food waste receptacle (15) based on the metrically consistent representation.

11. System according to any of the preceding claims, wherein the one or more first sensors (11, 12, 13) of each at least one first type of food waste quantifying device (10; 30) comprises a weighing scale (13) for determining weight of the food waste portions that are to be deposited into the first food waste receptacle (15), wherein the control unit (18) of the at least one first type of food waste quantifying device (10; 30) further comprises:
a tamper detector (308) configured to receive a measured mass or weight signal from the weighing scale (13), an estimated mass signal derived from an estimated density and a volume estimate based on light-based depth and/or stereo imaging, and/or acoustic impact features, and to compute at least one residual between the measured mass or weight signal and the estimated mass signal,
a threshold comparator (309) configured to compare the residual to a threshold and, upon threshold violation output a signal,
an alarm/log unit (310) configured to raise a notification or record an event based on the signal output from the threshold comparator (309), and optionally quarantine affected measurements.

12. Method performed by a system for detecting and quantifying food waste, the system comprising:
a first type of food-waste quantifying device (10; 30), the first type of food waste quantifying device (10; 30) comprising one or more first sensors (11, 12, 13) for capturing data on characteristics of food waste portions that are to be deposited into a first food waste receptacle (15) at the first type of food-waste quantifying device (10; 30), and
a second type of food-waste quantifying device (20), the second type of food waste quantifying device (20) comprising one or more second sensors (21, 22, 23) for capturing data on a second set of characteristics of food waste portions that are to be deposited into a second food waste receptacle (25) at the second type of food-waste quantifying device (20), the method comprising:
training, by the first type of food waste quantifying device (10; 30), an AI model using data on characteristics of food waste captured by the one or more first sensors (11, 12, 13) over time for a large amount of food waste portions deposited into the first food waste receptacle (15) over time, to determine type of food waste and volume of food waste for each of the large amount of portions of food waste,
determining, by the first type of food waste quantifying device (10; 30), type of food waste and volume of food waste for a first food waste portion deposited into the first food waste receptacle (15) after the large amount of food waste portions have been deposited, based on data on characteristics of the first food waste portion captured by the one or more first sensors (11, 12, 13) and by using data from the trained AI model,
triggering sending, by the first type of food waste quantifying device (10; 30), Al model information on its trained AI model to the second type of food-waste quantifying device (20), and
determining, by the second type of food waste quantifying device (10; 30), type of food waste and volume of food waste for a second portion of food waste that is to be deposited into the second food waste receptacle (25) based on the data of the second set of characteristics captured by the one or more second sensors (21, 22, 23) of the second portion of food waste, and based on the AI model information received from the first type of food-waste quantifying device (10; 30).

13. Method according to claim 12, wherein the determining of type of food waste and volume of food waste for the first food waste portion comprises determining which parts of a total volume of the first food waste portion that is of which type of food waste and how large share of the total volume of the first food waste portion that each type of food waste of the first food waste portion fills, based on the characteristics of the first food waste portion captured by the one or more first sensors (11, 12, 13) and by using (the data from) the trained AI model.

14. Method according to claim 12 or 13, wherein the determining of type of food waste and volume of food waste for the first portion is also based on information on food served in a site from which the first food waste portion originates and/or wherein the determining of type of food waste and volume of food waste for the second portion is also based on information on food served in a site from which the second food waste portion originates.

15. A computer program comprising
a first computer program part (185) comprising instructions, which, when executed by a processor (181) of a first type of food-waste quantifying device (10, 30), causes the first type of food-waste quantifying device (10, 30) to perform the steps of the method of any of claims 12-14 that are defined to be performed by the first type of food-waste quantifying device (10, 30), and
a second computer program part (285) comprising instructions, which, when executed by a processor (281) of a second type of food-waste quantifying device (20), causes the second type of food-waste quantifying device (20) to perform the steps of the method of any of claims 12-14 that are defined to be performed by the second type of food-waste quantifying device (20).
